Europäisches Patentamt

(19) European Patent Office
Office européen des brevets

(11) Publication number: **0 109 108**
**B1**

(12) **EUROPEAN PATENT SPECIFICATION**

(45) Date of publication of patent specification: **17.09.86**

(21) Application number: **83201499.7**

(22) Date of filing: **18.10.83**

(51) Int. Cl.⁴: **E 04 B 1/344, E 04 B 1/343, E 04 H 3/16, A 01 G 9/16**

㊄ Canopy.

(30) Priority: **19.10.82 NL 8204033**

(43) Date of publication of application:
**23.05.84 Bulletin 84/21**

(45) Publication of the grant of the patent:
**17.09.86 Bulletin 86/38**

(84) Designated Contracting States:
**BE DE FR NL**

(56) References cited:
**DE-A-1 816 876**
**FR-A-2 422 791**
**US-A-2 136 987**
**US-A-3 606 719**
**US-A-3 629 982**

(73) Proprietor: **Adviesbureau Van Egmond B.V.**
**Emmastraat 132**
**NL-7513 BG Enschede (NL)**

(72) Inventor: **van Egmond, Hendrik**
**Emmastraat 132**
**NL-7513 BG Enschede (NL)**
Inventor: **Ottink, Arend Jan**
**Boekeloseweg 101**
**NL-7553 DM Hengelo (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an enlargeable and reducable canopy comprising two opposite, vertical walls and a roof interconnecting said walls, in which both at least one vertical wall and the roof consist of plate-shaped elements pivotally interconnected by the respective shafts in concertina fashion and said at least one vertical wall is displaceable. Such a canopy is known from U.S. Patent Specification 3,534,512.

According to this prior art the canopy can be enlarged and reduced between two extreme positions by a relative displacement of the various elements. Canopies of this kind can be employed in buildings that can be opened in mild weather and closed in less mild weather, such as sporting halls, swimming pools, playgrounds, meeting rooms, inner yards of shop centres, skating rinks, restaurants and the like and also in greenhouses, horticular centres, animal homes and so on. Furthermore conceivable are buildings of permanently closed nature, which have, however, to be readily collapsable and displaceable such as workshops, work halls, schools, exhibition buildings, storing places and other temporary buildings. The invention has for its object to provide a reliable canopy which is not sensitive to disturbances for long and short terms with the aid of simple, known structural means.

Furthermore the invention has for its object to construct the canopy in a manner such that no problems will be involved in sealing against moisture and wind.

The invention furthermore has for its object to construct a canopy in a manner such that it is cheap and can be readily manufactured.

A final object of the invention is to construct a canopy so that a relatively low weight of the overall construction is attended by adequate rigidity. Said objects are achieved by a canopy of the kind set forth in the preamble which has, in accordance with the invention, the particular feature that between the pairs of pivotally interconnected plates of the vertical walls and the roof displaceable portals are arranged and the plate-shaped elements adjoining said portals are pivotally connected with said portals.

In a very practical embodiment the canopy can be constructed so that the portals are adapted or provided with means to conduct away rain water. In a practical, preferred embodiment the canopy according to the invention has the particular feature that in any position of the canopy the adjacent plate-shaped elements of the walls and the roof are at such an angle to one another that by exerting a force in the direction of movement of the portals they perform relatively pivotal movements, in particular in the position of the canopy corresponding to the maximum dimensions. It will be obvious that this is the most critical position, that is to say the position in which a heavier axial force has to be exerted to cause the canopy to move into any other position.

Finally it is preferred to use a variant in which at least in the closed position corresponding to the maximum dimensions of the canopy each plate-shaped element of the roof is in sealing relationship with the associated plate-shaped element of the wall. It is finally noted that said portals have the important function of ensuring the lateral stability of the canopy.

The invention will now be described more fully with reference to a drawing of a few arbitrary embodiments. The drawing shows in

Fig. 1 a perspective view of a canopy in a relatively large state in accordance with the invention,

Fig. 2 the canopy of Fig. 1 in a reduced state,

Fig. 3 an elevational view corresponding to Fig. 1 of a further embodiment of the canopy,

Fig. 4 a fragmentary plan view of the canopy shown in Fig. 1,

Fig. 5 a sectional view taken on the line V—V in Fig. 4,

Fig. 6 a detail VI of Fig. 4,

Fig. 7 an enlarged cross-sectional view taken on the line VII—VII in Fig. 4,

Fig. 8 a cross-sectional view taken on the line VIII—VIII in Fig. 4,

Fig. 9 a cross-sectional view taken on the line IX—IX of Fig. 6,

Fig. 10 a cross-sectional view taken on the line X—X in Fig. 6,

Fig. 11 a cross-sectional view taken on the line XI—XI in Fig. 4 and

Fig. 12 an elevational view XII of Fig. 6.

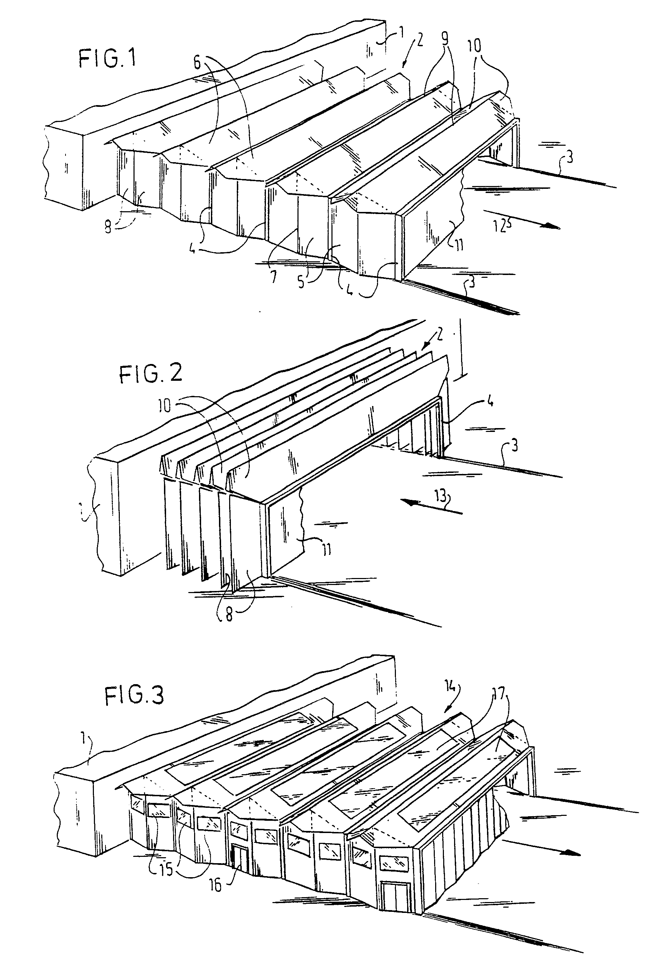

Fig. 1 shows a building 1 having a canopy 2 mounted thereon. This canopy 2 comprises a plurality of portals 4 adapted to run on rails 3, vertical walls 5 and roof parts 6 extending between said portals. The vertical walls 5 each consist of two elements 8 pivotally connected by means of vertical shafts 7 with one another and with the vertical parts of the portals 4 in the way of a concertina, whilst in a similar manner the roof parts 6 are each formed by two roof elements 10 pivotally connected by horizontal shafts 9 with one another and with the horizontal parts of the portals 4 in the way of a concertina. The outermost portal has a head wall 11. The arrow 12 indicates the direction in which the outermost portal has to be displaced for enlarging the canopy 2.

Fig. 2 shows the same canopy 2 which is reduced in the direction of the arrow 13.

Fig. 3 shows a canopy 14, the walls of which are provided with panes 15 and doors 16, whilst the roof is provided with panes 17.

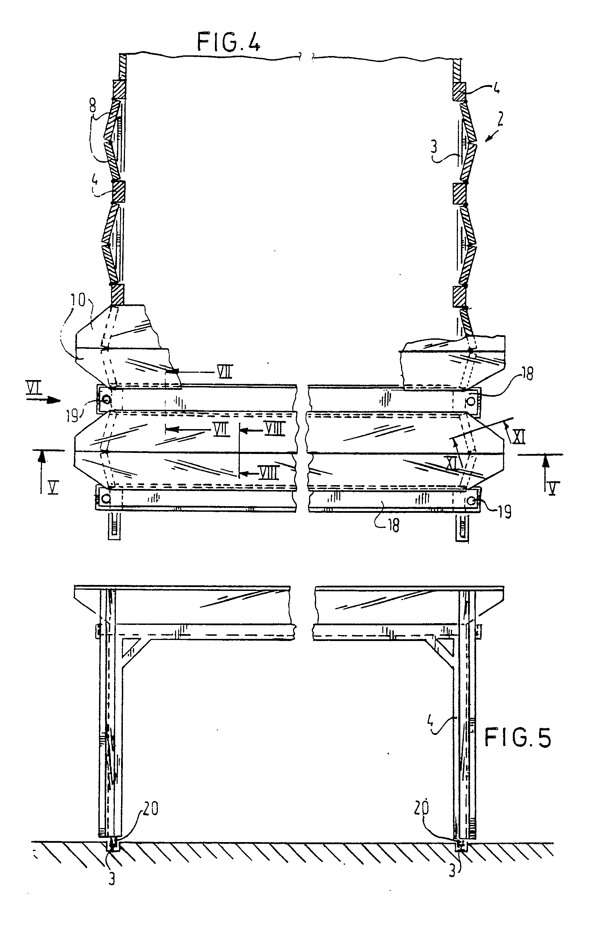

Fig. 4 is a fragmentary plan view of the canopy 2 of Fig. 1. In the drawing the canopy 2 is in its extreme, that is to say, completely closed position. In this position adjacent wall elements 8 are at an angle to one another. From the Figure it is furthermore apparent that the roof elements 10 protrude beyond the wall elements 8. In this situation all adjacent elements are in fully sealing relationship with one another in a manner to be described herein below.

The portals 4 carry gutters 18 with drain pipes 19.

Apart from the adjacent wall elements 8 the adjacent roof elements 10 are pairwise also at an angle to one another.

Fig. 5 shows a portal 4, which is adapted to run on rails 3 by means of wheels 20.

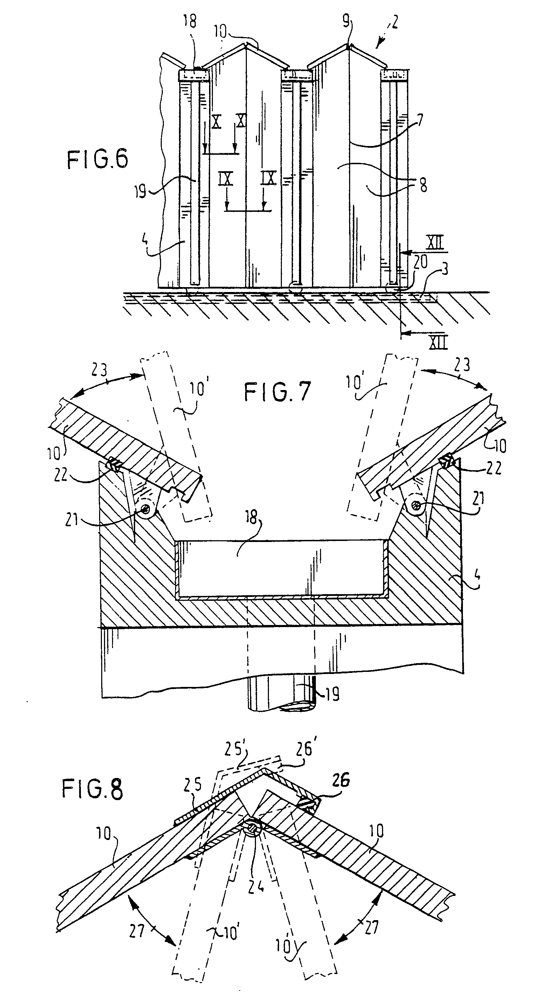

Fig. 6 shows a side view VI according to Fig. 4. From this Figure it is particularly apparent that the roof elements 10 in the fully closed state shown in Fig. 1 are pairwise at an angle to one another which is chosen on the basis of the length of the canopy and the load which has to be transferred to the ends of the roof elements 10.

Fig. 7 shows the horizontal part of a portal 4 with a gutter 18 and a drain pipe 19 adjoining the former. Through hinges 21 the roof elements 10 are fastened to the portal 4. In the closed state of the canopy 2 as shown in Fig. 1 the elements 10 are in sealing relationship with the portal by means of horizontal strips of sealing material 22. In the open state of the canopy 2 as shown in Fig. 2 the roof elements 10 are in the position designated by reference numeral 10' indicated in the drawing broken lines. The curved arrows 23 indicate the corresponding angular displacement.

Fig. 8 shows two roof elements 10, which are coupled with one another by a hinge 24. The left-hand roof element is provided with a metal strip 25, which carries at its free end a strip 26 of sealing material which, in the situation shown in Fig. 8, and corresponding with the situation shown in Fig. 1, is in sealing relationship with the top surface of the right-hand roof element 10. The broken lines indicate the positions of the roof elements 10, the strip 25 and the sealing strip 26 when the canopy 2 is in the open position shown in Fig. 2. The corresponding reference numerals are marked with an accent. The arrows 27 indicate the corresponding angular displacement.

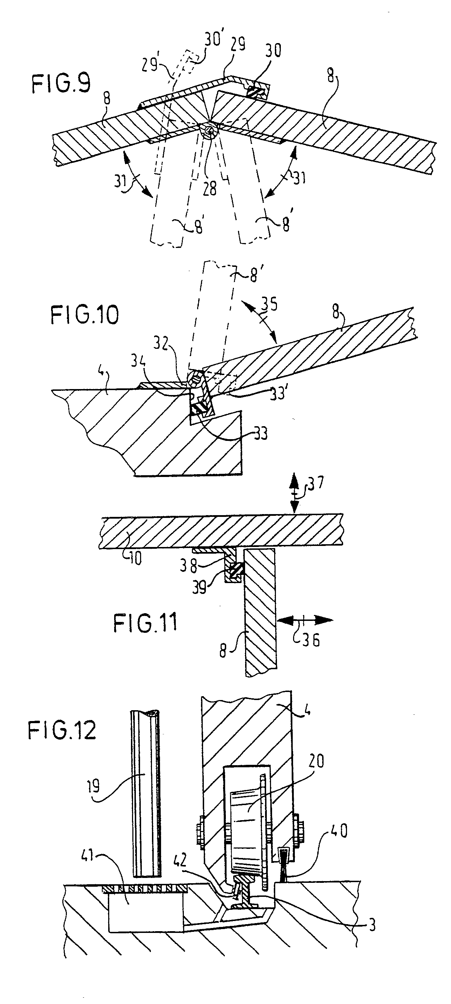

Fig. 9 shows two wall elements 8 couples with one another by a hinge 28. The left-hand wall element is provided with a metal strip 29, which carries at its free end a strip 30 of sealing material which is in sealing relationship with the side face of the right-hand wall element 8 in the situation shown in Fig. 9 corresponding with the situation shown in Fig 1. The broken lines indicate the positions of the wall elements 8, the strip 29 and the sealing strip 30 in the open position of the canopy 2 corresponding to Fig. 2. The reference numerals concerned are marked with an accent. The arrows 31 indicate the corresponding angular displacement.

Fig. 10 illustrates how the wall elements 8 are fastened with respect to the portals 4. The connection between is formed by a hinge 32, one part of which is connected with the portal 4 and the other with the wall element 8. The part connected with the element 8 carries a strip 33 of sealing material which, in the closed position of the canopy 2 shown in Fig. 1, is in sealing relationship with a corresponding face 34 of the portal 4. In this way an excellent seal is ensured in the closed position. The broken lines indicate the open position of the canopy, in which the strip 33 is free of the face 34. In this situation the reference numerals of the various parts are marked with an accent. An arrow 35 indicates the corresponding angular displacement.

Fig. 11 illustrates the seal between a wall element 8 and a roof element 10. The displacement of both elements is indicated by an arrow 36 and an arrow 37 respectively. The roof element 10 has fastened to it a profile strip 38 carrying a strip 39 of sealing material. In the closed position of the canopy shown the strip 39 is in sealing relationship with the corresponding inner face of the wall element 8. This configuration ensures an excellent seal.

Fig. 12 finally shows that each portal 4 is carried through wheels 20 by the rails 3. Each portal 4 is provided on both sides with wheels 42 which engage the underside of the rails 3. In this way the portal and hence the whole canopy is anchored to the ground. For optimizing the seal sealing brushes 40 are provided. The drain 19 opens out above a draining pit 41 provided in the ground.

It is emphasized that the invention is not limited to the embodiments described and illustrated. In particular the invention also encompasses a curved configuration that is to say a canopy whose side walls are not substantially flat, but curved. In this case the shape of the corresponding rails matches the desired shape. Any chinks left at the lower edge of the wall elements and the portals can be sealed with strips of trailing bushes or strips of resilient sealing material, which close the cracks only in the open position of the canopy and which are released from the ground when the elements are drawn in. Such a construction is known under the term of "dropping threshold".

**Claims**

1. Enlargeable and reducable canopy (2) comprising two opposite vertical walls (5) and a roof (6) connecting these walls (5), in which at least one vertical wall (5) and the roof (6) consist of plate-shaped elements (8; 10) hingedly connected with each other in the way of a concertina and that said at least one vertical wall (5) is movable, characterized in that between the pairs of plate-shaped elements being hingedly connected with each other of the vertical walls and the roof movable portals (4) are present, and that the plate-shaped elements adjoining said portals (4) are hingedly connected with these portals (4).

2. Canopy as claimed in claim 1, characterized in that said portals (4) are adapted to or provided with means for draining rain-water.

3. Canopy as claimed in claims 1 or 2, characterized in that the plate-shaped elements (8; 10) adjoining each other, of the walls (5) and of the roof (6) form in every position of the canopy (2) an angle of such a value that by exerting a force in the direction of movement of the portals (4) they perform a hinge-movement relative to each other.

4. Canopy as claimed in any any one of the preceding claims, characterized in that at least in the closed position, i.e. the situation corresponding with the maximum dimensions of the canopy (2), the roof (6) cooperates sealingly with a corresponding plate-shaped element of the wall (5).

## Patentansprüche

1. Erweiterbare und verringerbare Überdachung (2), umfassend zwei gegenüberliegende vertikale Wände (5) und ein Dach (6), das diese Wände (5) verbindet, worin wenigstens eine vertikale Wand (5) und das Dach (6) aus plattenförmigen Elementen (8; 10) besteht, die zusammenklappbar miteinander in der Weise einer Ziehharmonika verbunden sind, wobei die wenigstens eine vertikale Wand (5) bewegbar ist, dadurch gekennzeichnet, daß zwischen den Paaren von plattenförmigen Elementen der vertikalen Wände und des Dachs, die zusammenklappbar miteinander verbunden sind, bewegbare Portale (4) vorhanden sind, und daß die plattenförmigen Elemente, welche an die Portale (4) angrenzen, klappbar mit diesen Portalen (4) verbunden sind.

2. Überdachung nach Anspruch 1, dadurch gekennzeichnet, daß die Portale (4) an Mittel für das Ableiten von Regenwasser angepaßt oder mit Mitteln für das Ableiten von Regenwasser versehen sind.

3. Überdachung nach Anspruch 1 oder 2, dadurch gekennzeichnet, daß die plattenförmigen Elemente (8; 10) der Wände (5) und des Dachs (6), die aneinander angrenzen, in jeder Position der Überdachung (2) einen Winkel von einem solchen Wert bilden, daß sie durch Ausüben einer Kraft in der Richtung der Bewegung der Portale (4) eine Gelenkbewegung relativ zueinander ausführen.

4. Überdachung nach irgendeinem der vorhergehenden Ansprüche, dadurch gekennzeichnet, daß das Dach (6) wenigstens in der geschlossenen Position, d.h. der Situation, die den maximalen Dimensionen der Überdachung (2) entspricht, abdichtend mit einem entsprechenden plattenförmigen Element der Wand (5) zusammenwirkt.

## Revendications

1. Auvent pouvant être agrandi et diminué (2) comprenant deux parois verticales opposées (5) et un toit (6) reliant ces parois (5), dans lequel au moins une paroi verticale (5) et le toit (6) sont composés d'éléments (8; 10) en forme de panneaux qui sont articulés l'un sur l'autre à la manière d'un accordéon et où cette ou ces paroi verticale (5) est mobile, caractérisé en ce que des portiques mobiles (4) sont prévus entre les paires d'éléments en forme de panneaux articulés l'un à l'autre des parois verticales et du toit et en ce que les éléments en forme de panneaux qui sont adjacents à ces portiques (4) sont reliés à ces portiques (4) de manière pivotante.

2. Auvent selon la revendication 1, caractérisé en ce que les portiques (4) sont adaptés pour évacuer les eaux de pluie ou équipés de moyens servant à les évacuer.

3. Auvent selon la revendication 1 ou 2, caractérisé en ce que, dans toutes les positions de l'auvent (2), les éléments en forme de panneaux adjacents l'un à 'autre (8; 10) des parois (5) et du toit (6), font un angle d'une valeur telle que, si une force est exercée dans le sens du déplacement des portiques (4), ils effectuent un mouvement de charnière l'un par rapport à l'autre.

4. Auvent selon l'une des revendications précédentes, caractérisé en ce qu'au moins dans la position fermée, c'est-à-dire dans la situation correspondant aux dimensions maximales de l'auvent (2), le toit (8) coopère de manière étanche avec un élément correspondant, en forme de panneau de la paroi (5).

FIG.1

FIG.2

FIG.3

FIG.4

FIG.5

0 109 108

FIG.6

FIG.7

FIG.8

3

FIG.9

FIG.10

FIG.11

FIG.12

4